# EUROPEAN PATENT APPLICATION

(11) **EP 4 776 521 A1**
(43) Date of publication of application: **15.07.2026**
(21) Application number: 23951287.4
(22) Date of filing: 20.10.2023
(51) Int. Cl.: H04B 7/0413

(54) **MIMO COMMUNICATION SYSTEM BASED ON CROSS-POLARIZED LEAKY COAXIAL CABLE**

(30) Priority: 06.09.2023 CN 202311140109
(71) Applicant: Zhongtian Radio Frequency Cable Co., Ltd., Nantong, Jiangsu 226000 (CN); Jiangsu Zhongtian Technology Co., Ltd., Nantong, Jiangsu 226000 (CN)
(72) Inventor: LIN, Longlong, Nantong, Jiangsu 226000 (CN); ZHAO, Yunkun, Nantong, Jiangsu 226000 (CN); XU, Binbin, Nantong, Jiangsu 226000 (CN); ZHANG, Jiafeng, Nantong, Jiangsu 226000 (CN); ZHAO, Ruijing, Nantong, Jiangsu 226000 (CN); WANG, Bin, Nantong, Jiangsu 226000 (CN)
(74) Representative: J A Kemp LLP
(86) International application number: PCT/CN2023/125751
(87) International publication number: WO 2025/050471

(57) **Abstract**

The present application relates to the technical field of mobile communications, and provides a MIMO communication system based on a cross-polarized leaky coaxial cable, applicable to coverage of 2G/3G/4G/5G/6G signals. By receiving signals of different standards from different operators, it is determined whether adjacent channel interference and intermodulation interference occur in a combination of the signals. The signals of different standards in the combination of the signals of different standards which produces interference are respectively fed into different leaky coaxial cables. On one hand, adjacent channel interference between adjacent channel signals in a same leaky coaxial cable can be avoided, or intermodulation interference among different signals can be avoided, thereby reducing interferences between the signals and improving communication quality. On the other hand, radiation polarization directions of every two adjacent leaky coaxial cables are different, so that coherence of leaky coaxial cable signals is reduced, thereby improving the communication quality.

## Description

The present application claims priority to Chinese patent application No. 202311140109.0, filed to China National Intellectual Property Administration on September 6, 2023 and entitled "MIMO COMMUNICATION SYSTEM BASED ON CROSS-POLARIZED LEAKY COAXIAL CABLE", which is hereby incorporated by reference in its entirety.

### TECHNICAL FIELD

The present application relates to the technical field of mobile communications, and in particular, to a MIMO communication system based on a cross-polarized leaky coaxial cable.

### BACKGROUND

A leaky coaxial cable integrates signal transmission, launch and reception functions, has dual roles of a coaxial cable and an antenna, and is mainly suitable for coverage in narrow and long area scenarios such as tunnels, roadways, and subways. When constructing a wireless communication system based on a leaky coaxial cable, due to the large number of operator frequency bands, when the communication system based on the leaky coaxial cable needs to centrally transmit signals of multiple frequency bands, interference is likely to occur in a case that multiple operator frequency bands are fed into the same leaky coaxial cable. In an actual network transmission process, transmitted signals are easily interfered by asynchronous or multipath fading transmission channels, forming co-channel interference or adjacent channel interference. Such interferences can easily cause signal instability, noise, distortion and the like during the transmission process for the entire mobile communication network. Furthermore, signal source devices of various operators are independent from each other and there is no coordinated communication control step, which is not conducive to reducing co-channel or adjacent channel interference and makes it difficult to further improve capacity of a MIMO system.

Currently, multiple leaky coaxial cables with the same polarization are used to implement the MIMO system, which imposes high requirements on the spacing between leaky coaxial cables. If the spacing between adjacent leaky coaxial cables does not meet spatial isolation requirements, it will seriously affect MIMO capacity. However, within the limited installation space of rail transit, it is also necessary to install various cables and devices such as subway-dedicated leaky coaxial cables, police-dedicated leaky coaxial cables, optical cable racks, etc. To avoid interference, a certain installation distance is also required between cables of different wireless communication systems. This results in limited installation space for leaky coaxial cables while having to meet the spacing distance, making it difficult to deploy MIMO systems with a large number of 2×2 or above.

### SUMMARY

In view of this, an objective of the present application is to provide a MIMO communication system based on a cross-polarized leaky coaxial cable.

In a first aspect, an embodiment of the present application provides a MIMO communication system based on a cross-polarized leaky coaxial cable, including: multiple RRU (Remote Radio Unit) devices, multiple POIs (multi-system access and combining platform), and multiple leaky coaxial cables arranged side by side, where radiation polarization directions of every two adjacent leaky coaxial cables are different; the POIs are signal-connected to the leaky coaxial cables, and each POI is connected to one leaky coaxial cable; the RRU devices are signal-connected to the POIs, where RRU devices of 5G/6G standards are signal-connected to all POIs; among RRU devices of 2G/3G/4G standards, those RRU devices whose signals have adjacent channel interference or intermodulation interference are signal-connected to different POIs.

In this embodiment, by setting adjacent leaky coaxial cables to have different radiation polarization directions, connecting the POIs to the leaky coaxial cables, signal-connecting the RRU devices to the POIs, signal-connecting the RRU devices of 5G/6G standards to all POIs; and among RRU devices of 2G/3G/4G standards, signal-connecting those RRU devices whose signals have adjacent channel interference or intermodulation interference to different POIs, effects of reducing signal interference between different leaky coaxial cables and improving communication quality are achieved.

In some embodiments, a control unit is further included, connected between the RRU devices and the POIs, the control unit is configured to receive signals of different standards and different frequency bands of different operators from the multiple RRU devices, form a signal pair by pair-wise combining signals of different frequency bands of 2G/3G/4G standards, determine whether the signal pair produces adjacent channel interference or intermodulation interference, feed signals of different frequency bands of 5G/6G standards into all POIs, and feed signals of different frequency bands of 2G/3G/4G standards in the signal pair that produces interference into different POIs respectively.

Further, by setting a control unit and using the control unit to connect the RRU devices and the POIs, receiving signals of different operators, different standards, and different frequency bands sent by the RRU side, feeding signals of different frequency bands of 5G/6G standards into all POIs, forming the signal pair by pair-wise combining signals of different frequency bands of 2G/3G/4G standards, determining whether the signal pair produces adjacent channel interference or intermodulation interference, and feeding signals of different frequency bands of 2G/3G/4G standards in the signal pair that produces interference into different POIs respectively, signal interference between leaky coaxial cables is reduced.

In some embodiments, the control unit further includes an adjacent channel interference determining module, the adjacent channel interference determining module is configured to acquire a first upper frequency limit and a first lower frequency limit of a frequency band of a first signal in the signal pair, and a second upper frequency limit and a second lower frequency limit of a frequency band of a second signal in the signal pair; determine that the signal pair will produce adjacent channel interference based on the first upper frequency limit being less than the second upper frequency limit and a difference between the second lower frequency limit and the first upper frequency limit being not greater than 1MHz, or based on the first upper frequency limit being greater than the second upper frequency limit and a difference between the first lower frequency limit and the second upper frequency limit being not greater than 1MHz.

Further, by comparing the upper and lower frequency limits of two signals in the signal pair to determine whether the two signals will produce adjacent channel interference, it facilitates subsequently feeding the two signals that will produce adjacent channel interference into different leaky coaxial cables with a greater spacing distance, to further reduce interference.

In some embodiments, the control unit further comprises an intermodulation interference determining module, the intermodulation interference determining module is configured to acquire a first upper frequency limit and a first lower frequency limit of a frequency band of a first signal in the signal pair, and a second upper frequency limit and a second lower frequency limit of a frequency band of a second signal in the signal pair; calculate a frequency at which the signal pair produces intermodulation interference according to an intermodulation interference formula |m₁F₁±m₂F₂±···±mₙFₙ|, where m₁±m₂···±mₙ+n≤9, mₙ≤8, n≤9, mₙ and n are positive integers, Fₙ is any one of the first upper frequency limit, the first lower frequency limit, the second upper frequency limit, or the second lower frequency limit; determine that the signal pair will produce intermodulation interference based on that the frequency at which the intermodulation interference is produced falls within frequency bands of signals of different standards and different frequency bands from different operators.

Further, by acquiring the first upper frequency limit and the first lower frequency limit of the frequency band of the first signal in the signal pair, and the second upper frequency limit and the second lower frequency limit of the frequency band of the second signal in the signal pair, and calculating the frequency at which intermodulation interference is produced for the first signal and the second signal in combination with the intermodulation interference formula, if the frequency at which intermodulation interference is produced falls within the frequency band of signals of different standards and different frequency bands from different operators, it is determined that the signal pair will produce intermodulation interference, which facilitates subsequently feeding the two signals that will produce intermodulation interference into different leaky coaxial cables with a greater spacing distance to further reduce interference.

In some embodiments, the control unit is integrated with the multiple POIs into one unit; or, the multiple POIs are integrated into one POI unit, and the control unit is connected between the POI unit and the multiple RRU devices.

Further, by integrating the control unit with the multiple POIs into one unit, or integrating the multiple POIs into one POI unit and connecting the control unit between the POI unit and the multiple RRU devices, the structure is simplified, and installation and maintenance of the device are facilitated.

In some embodiments, a polarization direction of the leaky coaxial cables is vertical polarization, horizontal polarization, +45° polarization, or -45° polarization.

Further, by setting different polarization directions for the leaky coaxial cables, the minimum allowable installation distance between leaky coaxial cables is reduced, thereby saving the space required for installing the leaky coaxial cables. More leaky coaxial cables can also be deployed, thereby increasing the number of user accesses and improving communication quality.

In some embodiments, the RRU devices of 2G/3G/4G standards are signal-connected to at most two POIs.

Further, by limiting the number of POIs to which the RRU devices of 2G/3G/4G standards are signal-connected, signal interference is reduced, thereby improving communication quality.

In some embodiments, the radiation polarization directions of the multiple leaky coaxial cables are alternately arranged in a manner of horizontal polarization and vertical polarization.

Further, by alternately arranging the radiation polarization directions of the leaky coaxial cables in the manner of horizontal polarization and vertical polarization, the minimum allowable distance between leaky coaxial cables is reduced, thereby allowing more leaky coaxial cables to be deployed, increasing the number of user accesses, and improving communication quality.

In some embodiments, signals of different frequency bands of 2G/3G/4G standards are pair-wise combined to form a signal pair, and two signals in the signal pair that produces adjacent channel interference or intermodulation interference are fed into different leaky coaxial cables with a same polarization manner through different POIs respectively.

Further, by pair-wise combining signals of different frequency bands of 2G/3G/4G standards to form the signal pair, and feeding the two signals in the signal pair that produces interference into different leaky coaxial cables with the same polarization manner through different POIs, interference between signals is avoided, thereby increasing communication quality.

In a second aspect, an embodiment of the present application provides a MIMO communication system based on a cross-polarized leaky coaxial cable, including: RRU devices, a POI, and multiple leaky coaxial cables arranged side by side, radiation polarization directions of every two adjacent leaky coaxial cables are different, the POI is signal-connected to the leaky coaxial cables; the MIMO communication system further includes: a signal receiving module, connected to the RRU devices, and configured to receive signals of different standards and different frequency bands of different operators from the RRU devices; an interference combination screening module, connected to the signal receiving module, and configured to form a signal pair by pair-wise combining signals of different frequency bands of 2G/3G/4G standards, and determine whether the signal pair will produce adjacent channel interference or intermodulation interference; a leaky cable feeding control module, connected to the interference combination screening module, the signal receiving module, and the POI, and configured to feed signals of different frequency bands of 5G/6G standards into all leaky coaxial cables through the POI, and feed signals of different frequency bands of 2G, 3G, 4G standards in the signal pair that produces interference into different leaky coaxial cables through the POI respectively.

Further, the setup and control of links from RRU devices of different operators to input ports of the POIs are realized, preventing adjacent channel signals and interfering signals from being fed into the same leaky coaxial cable, reducing signal interference, and improving communication quality. In addition, the radiation polarization directions of every two adjacent leaky coaxial cables are different, reducing the requirement on a distance between leaky coaxial cables, facilitating construction and installation, and allowing more leaky coaxial cables to be deployed, thereby increasing the number of user accesses, and improving communication quality.

In a third aspect, an embodiment of the present application provides a MIMO communication system based on a cross-polarized leaky coaxial cable, including: RRU devices of different standards and different frequency bands of Unicom, Mobile, and Telecom, a first POI, a second POI, a third POI, a fourth POI, and 4 leaky coaxial cables arranged side by side, radiation polarization directions of every two adjacent leaky coaxial cables are different, each POI device is separately connected to one leaky coaxial cable; all 5G/6G RRU devices among the RRU devices are signal-connected to all POI devices, and among the RRU devices, 2G/3G/4G RRU devices whose signals produce adjacent channel interference or intermodulation interference are signal-connected to different POI devices.

Further, by setting RRU devices of different standards and frequency bands of each operator, four leaky coaxial cables arranged side by side, radiation polarization directions of every two adjacent leaky coaxial cables being different, each POI device being separately connected to one leaky coaxial cable, all 5G/6G RRU devices being signal-connected to all POI devices, and 2G/3G/4G RRU devices among the RRU devices whose signals produce adjacent channel interference or intermodulation interference being signal-connected to different POI devices, effects of reducing signal interference and improving communication quality are achieved.

### Beneficial Effects Achievable by the Present Application

The MIMO communication system based on the cross-polarized leaky coaxial cable provided in the present application can be applied to coverage of 2G/3G/4G/5G/6G signals. By receiving signals of different standards from different operators, and processing 2G/3G/4G and 5G/6G signals separately, signals of different frequency bands of 5G/6G standards are fed into all leaky coaxial cables, which ensures the power of 5G/6G signals, thereby improving network coverage and download rates of 5G/6G signals. Signals of different frequency bands of 2G/3G/4G standards are pair-wise combined to form signal pair(s), it is determined whether the signal pair(s) will produce adjacent channel interference or intermodulation interference, and signals of different standards in a combination of different standard signals that produce interference are fed into different leaky coaxial cables respectively. On one hand, adjacent channel interference between adjacent channel signals in the same leaky coaxial cable can be avoided, or intermodulation interference among different signals is avoided, thereby reducing signal interference and improving communication quality. On the other hand, the radiation polarization directions of every two adjacent leaky coaxial cables are different, reducing the minimum allowable installation distance between the leaky coaxial cables, thereby saving the space required for installing the leaky coaxial cables, allowing more leaky coaxial cables to be deployed, increasing the number of user accesses, and improving communication quality.

To make the above objectives, features, and advantages of the present application more clearly understandable, preferred embodiments are described below in detail with reference to the accompanying drawings.

### BRIEF DESCRIPTION OF DRAWINGS

FIG. 1 shows a schematic diagram of a 2G/3G/4G installation scheme for leaky coaxial cables in a subway tunnel according to the present application.
FIG. 2 shows a schematic diagram of the structural principle of a MIMO communication system based on a cross-polarized leaky coaxial cable according to the present application.
FIG. 3 shows a schematic diagram of the structural principle of a MIMO communication system based on a cross-polarized leaky coaxial cable with a control unit according to the present application.
FIG. 4 shows a schematic diagram of the structural principle of a control unit of a MIMO communication system based on a cross-polarized leaky coaxial cable according to the present application.
FIG. 5 shows a flowchart of a MIMO communication control method based on a cross-polarized leaky coaxial cable according to the present application.
FIG. 6 shows a second schematic diagram of the structural principle of a MIMO communication system based on a cross-polarized leaky coaxial cable according to the present application.
FIG. 7 shows a second schematic diagram of the structural principle of a control unit of a MIMO communication system based on a cross-polarized leaky coaxial cable according to the present application.

Where: 1- Communication equipment room, 2- Coupler, 3- Power divider, 4-Leaky coaxial cable, 5- Signal source device, 6- POI (multi-system access and combining platform), 7- Telecom CDMA RRU, 8- Mobile FDD-LTE1.8 RRU, 9-Unicom FDD-LTE1.8 RRU, 10- Telecom FDD-LTE2.1 RRU, 11- Mobile TD (E) RRU, 12- Mobile NR2.6 RRU, 13- Telecom & China Unicom NR3.5 RRU, 14- First POI, 15-Second POI, 16- Third POI, 17- Fourth POI, 18- First vertically polarized leaky coaxial cable, 19- First horizontally polarized leaky coaxial cable, 20- Second vertically polarized leaky coaxial cable, 21- Second horizontally polarized leaky coaxial cable, 22- Signal receiving module, 23- Interference combination screening module, 24-Leaky cable feeding control module, 25- Control unit, 26- Adjacent channel interference determining module, 27- Intermodulation interference determining module.

### DESCRIPTION OF EMBODIMENTS

The terms "comprising", "including", "containing" or "characterized by" in the description, claims and accompanying drawings of the present application are synonymous, are inclusive of endpoints or open-ended, and do not exclude additional, unrecited elements or method steps. "Comprising" is a technical term used in claim language, meaning the presence of element(s), but other elements may also be added and still form a construction or a method within the scope of the claims.

It should be noted that similar reference numerals and letters refer to similar items in the following drawings. Therefore, once an item is defined in one drawing, it does not require further definition and explanation in subsequent drawings. Furthermore, terms such as "first", "second", "third" and the like are used only for distinguishing description and cannot be understood as indicating or implying relative importance. The term "about" in the present application means including slight variations in value (up to +/- 10%).

The present application has found that when constructing a wireless communication system based on a leaky coaxial cable, due to a large number of operator frequency bands, when the communication system based on the leaky coaxial cable needs to centrally transmit signals of multiple frequency bands, interference is likely to occur in a case that multiple operator frequency bands are fed into the same leaky coaxial cable. In an actual network transmission process, transmitted signals are easily interfered by asynchronous or multipath fading transmission channels, forming co-channel interference or adjacent channel interference. Such interferences can easily cause signal instability, noise, distortion and the like during the transmission process for the entire mobile communication network. Furthermore, signal source devices of various operators are independent from each other and there is no coordinated communication control step, which is not conducive to reducing co-channel or adjacent channel interference and makes it difficult to further improve capacity of a MIMO system.

Meanwhile, multiple leaky coaxial cables with the same polarization are used to implement the MIMO system, which imposes high requirements on the spacing between leaky coaxial cables. If the spacing between adjacent leaky coaxial cables does not meet spatial isolation requirements, it will seriously affect MIMO capacity. However, within the limited installation space of rail transit, it is also necessary to install various cables and devices such as subway-dedicated leaky coaxial cables, police-dedicated leaky coaxial cables, optical cable racks, etc. To avoid interference, a certain installation distance is also required between cables of different wireless communication systems. This results in limited installation space for leaky coaxial cables while having to meet the spacing distance, making it difficult to deploy MIMO systems with a large number of 2×2 or above.

In view of this, an embodiment of the present application provides a method for controlling a MIMO communication system based on a cross-polarized leaky coaxial cable to reduce interference, including steps: receiving signals of different standards and different frequency bands from different operators; forming a signal pair by pair-wise combining signals of different frequency bands of 2G/3G/4G standards, and determining whether the signal pair will produce adjacent channel interference or intermodulation interference; feeding signals of different frequency bands of 5G/6G standards into all leaky coaxial cables, feeding signals of different frequency bands of 2G/3G/4G standards in the signal pair that produces interference into different leaky coaxial cables respectively, where radiation polarization directions of every two adjacent leaky coaxial cables are different.

In other embodiments of the present application, a MIMO communication system based on a cross-polarized leaky coaxial cable is also provided, including: multiple RRU devices, multiple POIs, and multiple leaky coaxial cables arranged side by side, and radiation polarization directions of every two adjacent leaky coaxial cables are different; the POIs are signal-connected to the leaky coaxial cables, each POI is connected to one leaky coaxial cable; the RRU devices are signal-connected to the POIs, where RRU devices of 5G/6G standards are signal-connected to all POIs; among RRU devices of 2G/3G/4G standards, those RRU devices whose signals have adjacent channel interference or intermodulation interference are signal-connected to different POIs.

The method for controlling the MIMO communication system based on the cross-polarized leaky coaxial cable to reduce interference and the MIMO communication system based on the cross-polarized leaky coaxial cable provided in the embodiments of the present application can be applied to coverage of 2G/3G/4G/5G/6G signals. By receiving signals of different standards from different operators, and processing 2G/3G/4G and 5G/6G signals separately, signals of different frequency bands of 5G/6G standards are fed into all leaky coaxial cables, which ensures the power of 5G/6G signals, thereby improving network coverage and download rates of 5G/6G signals. Signals of different frequency bands of 2G/3G/4G standards are pair-wise combined to form signal pair(s), it is determined whether the signal pair(s) will produce adjacent channel interference or intermodulation interference, and signals of different standards in a combination of different standard signals that produce interference are fed into different leaky coaxial cables respectively. On one hand, adjacent channel interference between adjacent channel signals in the same leaky coaxial cable can be avoided, or intermodulation interference among different signals is avoided, thereby reducing signal interference and improving communication quality. On the other hand, the radiation polarization directions of every two adjacent leaky coaxial cables are different, reducing the minimum allowable installation distance between the leaky coaxial cables, thereby saving the space required for installing the leaky coaxial cables, allowing more leaky coaxial cables to be deployed, increasing the number of user accesses, and improving communication quality.

In other embodiments of the present application, a MIMO communication system based on a cross-polarized leaky coaxial cable is also provided, including: RRU devices, a POI, and multiple leaky coaxial cables arranged side by side, radiation polarization directions of every two adjacent leaky coaxial cables are different, the POI is signal-connected to the leaky coaxial cables; further including: a signal receiving module, connected to the RRU devices, configured to receive signals of different standards and different frequency bands of different operators from the RRU devices; an interference combination screening module, connected to the signal receiving module, configured to form a signal pair by pair-wise combining signals of different frequency bands of 2G/3G/4G standards, and determine whether the signal pair will produce adjacent channel interference or intermodulation interference; a leaky cable feeding control module, connected to the interference combination screening module, the signal receiving module, and the POI, configured to feed signals of different frequency bands of 5G/6G standards into all leaky coaxial cables through the POI, and feed signals of different frequency bands of 2G, 3G, 4G standards in the signal pair that produces interference into different leaky coaxial cables through the POI respectively.

The above embodiment provides the signal receiving module, the interference combination screening module, and the leaky cable feeding control module, the RRU devices of different operators are connected to receive the signals of different standards from different operators, the signals of different frequency bands of 5G/6G standards are fed into all leaky coaxial cables, it is determined whether a combination of signals of different frequency bands of 2G/3G/4G standards will produce adjacent channel interference and intermodulation interference. Signals of different frequency bands of 2G/3G/4G standards that produce interference are fed into different leaky coaxial cables through the POIs respectively, thereby realizing the setup and control of links from RRU devices of different operators to input ports of the POI, preventing adjacent channel signals and interfering signals from being fed into the same leaky coaxial cable, reducing signal interference, improving communication quality, while ensuring the power of 5G/6G signals, and improving network coverage and download rates of 5G/6G signals.

The technical solutions in the embodiments of the present application will be described clearly and completely below in conjunction with the accompanying drawings in the embodiments of the present application. Obviously, the described embodiments are only a part of the embodiments of the present application, not all of them. Based on the embodiments in the present application, all other embodiments obtained by a person of ordinary skill in the art without making creative efforts fall within the protection scope of the present application.

Reference to "an embodiment" herein means that a particular feature, structure, or characteristic described in connection with the embodiment may be included in at least one embodiment of the present application. The appearances of this phrase in various places in the specification are not necessarily all referring to the same embodiment, nor are separate or alternative embodiments mutually exclusive from other embodiments. Those skilled in the art explicitly and implicitly understand that the embodiments described herein can be combined with other embodiments.

### Embodiment 1

Mobile communication follows the technological development pattern of one generation per decade, having experienced the development of 1G, 2G, 3G, 4G, and 5G. The next generation 6G technology is under research and development. Each generational leap, each technological advancement, greatly promotes industrial upgrading and economic and social development. A leaky coaxial cable is a transmission cable integrating signal transmission, launch and reception functions, having dual roles of a coaxial cable and an antenna, and is mainly suitable for coverage in narrow and long area scenarios such as tunnels, roadways, and subways. Currently, in narrow and enclosed indoor environments, network coverage is generally achieved by deploying leaky coaxial cables. For example, subways are the preferred public transportation in large cities, with complex environments and large passenger flow, they are typical indoor data hotspot scenarios for operators and key scenarios for user reputation evaluation and service experience. Subways have become a key scenario for communication network coverage. The communication system based on a leaky coaxial cable needs to centrally transmit signals of multiple frequency bands, such as 2G network: China Mobile's GSM900MHz (uplink 890-909MHz, downlink 935-954MHz), EGSM900MHz (uplink 885-890MHz, downlink 930-935MHz), GSM1800MHz (uplink 1710-1735MHz, downlink 1805-1830MHz); China Unicom's GSM900MHz (uplink 909-915MHz, downlink 954-960MHz), GSM1800MHz (uplink 1735-1755MHz, downlink 1830-1850MHz); China Telecom's CDMA800MHz (uplink 825-835MHz, downlink 870-880MHz); 3G network: China Mobile's TD-SCDMA 1880-1900MHz/2010-2025MHz; China Unicom's WCDMA: 2100MHz (uplink 1940-1965MHz, downlink 2130-2155MHz); China Telecom's 3G CDMA (uplink 1920-1940MHz, downlink 2110-2130MHz); 4G network: China Mobile's FDD-LTE900MHz (uplink 892-904MHz, downlink 937-949MHz), TD-LTE1880-1900MHz/2320-2370MHz/2575-2675MHz; China Unicom's FDD-LTE (uplink 1745-1765MHz, downlink 1840-1860MHz), TD-LTE2300-2320MHz/2555-2575MHz; China Telecom's FDD-LTE (uplink 1765-1780MHz, downlink 1860-1875MHz), TD-LTE2370-2390MHz/2635-2655MHz; 5G network: China Mobile's 2.6GHz (2515MHz-2675MHz)/4.9GHz (4800MHz-4900MHz); China Unicom's 3.5GHz (3500-3600MHz); China Telecom's 3.5GHz (3400-3500MHz); 6G network: frequency bands may be 7025-7125MHz, 6425-7025MHz, 5925-7125MHz, 10000-10500MHz. Due to the large number of operator frequency bands, a situation of adjacent frequency coexistence in the same geographical area inevitably occurs. Interference is likely to occur in a case that multiple operator frequency bands are fed into the same leaky coaxial cable. For example, China Unicom's 4G band 1840-1860MHz, China Telecom's 4G band 1860-1875MHz, and China Mobile's 4G band 1880-1900MHz are closely adjacent to each other, simultaneously feeding them into the same leaky coaxial cable causes severe adjacent channel interference. For another example, China Mobile's TD-LTE and the large-scale deployed 3G network's TD-SCDMA coexist in adjacent frequencies in the same geographical area, inevitably causing a certain degree of interference. Such interferences can easily cause signal instability, noise, distortion and the like during the transmission process of the entire mobile communication network.

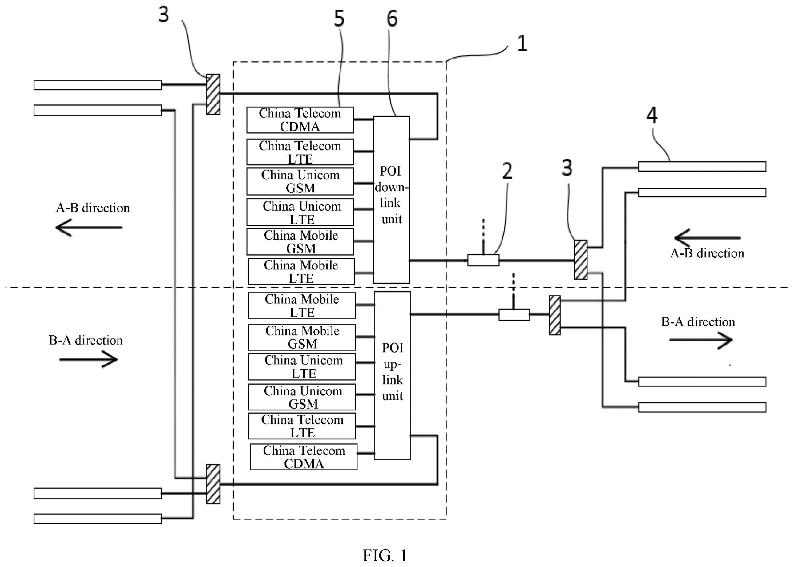

For example, as shown in a schematic diagram of a 2G/3G/4G installation scheme for leaky coaxial cables in a subway tunnel in FIG. 1, a communication equipment room 1 houses signal source devices 5 (e.g., RRU remote radio units) of different operators, such as China Telecom, China Unicom, China Mobile, with different standards and frequency bands. The source signals from each signal source device 5 are transmitted to a leaky coaxial cable 4 through a POI 6 (multi-system access and combining platform), then through a coupler 2 (the coupler 2 is set to facilitate signal transmission to a concourse or a platform. A signal path can be transmitted to the station concourse or the platform via the coupler to achieve coverage of the concourse or the platform) and a power divider 3, or only through the power divider 3, and the leaky coaxial cable is used to cover communications in a tunnel section. The signal source devices 5 of respective operators are independent from each other and there is no coordinated communication control step, which is not conducive to reducing co-channel or adjacent channel interference and makes it difficult to further improve capacity of the MIMO system.

Furthermore, in 5G/6G communications, Multiple-Input Multiple-Output (MIMO) is an extremely important technology that can greatly increase channel capacity, multiple antennas are used at both a transmitting end and a receiving end to form a transmission system with multiple channels between transmission and reception. FIG. 1 shows a 2×2 MIMO system. Currently, multiple leaky coaxial cables are used to implement MIMO. However, since multiple leaky coaxial cables use the same polarization manner, when the spacing between leaky coaxial cables does not meet spatial isolation requirements, it will seriously affect MIMO capacity.

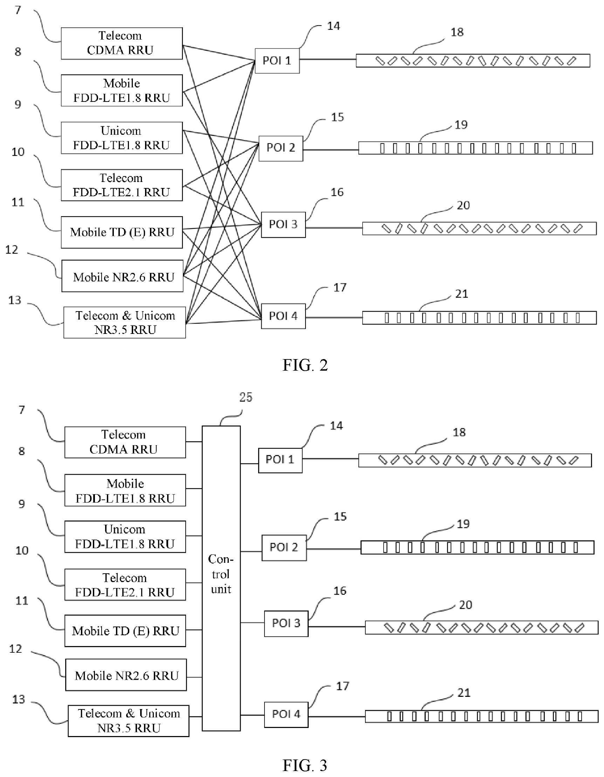

In view of this, the present application provides a MIMO communication system based on a leaky coaxial cable that reduces interference, as shown in FIG. 2, including RRUs (Remote Radio Unite, Remote Radio Unit) of different frequency bands of different operators. RRUs and BBUs (Building Baseband Unite, Building Baseband unit) perform signal transmission through optical fibers, and BBUs are generally centrally placed in the communication equipment room. FIG. 2 includes RRU units of various operators, including Telecom CDMA RRU 7, Mobile FDD-LTE1.8 RRU 8, Unicom FDD-LTE1.8 RRU 9, Telecom FDD-LTE2.1 RRU 10, Mobile TD (E) RRU 11 (i.e., Mobile TD-LTE E-band RRU), Mobile NR2.6 RRU 12, Telecom & China Unicom NR3.5 RRU 13, which meet 2G/3G/4G/5G network coverage. Since 6G has not been officially deployed, it is not shown in FIG. 2. Telecom CDMA RRU 7 uses the 800MHz band with a frequency range of 825-835MHz/870-880MHz. Mobile FDD-LTE1.8 RRU 8 uses the 1.8GHz band with a frequency range of 1710-1735MHz/1805-1830MHz. Unicom FDD-LTE1.8 RRU 9 uses the 1.8GHz band with a frequency range of 1735-1765MHz/1830-1860MHz. Telecom FDD-LTE2.1 RRU 10 uses the 2.1GHz band with a frequency range of 1920-1940MHz/2110-2130MHz. Mobile TD (E), i.e., Mobile TD-LTE uses E-band, and Mobile TD (E) RRU 11 uses the 2.3GHz band with a frequency range of 2320-2370MHz. Mobile NR2.6 RRU 12 uses the 2.6GHz band with a frequency range of 2515MHz-2675MHz. Telecom & Unicom NR3.5 RRU 13 uses the 3.5GHz band with a frequency range of 3400-3500MHz and 3500MHz-3600MHz.

The frequency range of Telecom CDMA800 is 825-835MHz (uplink)/870-880MHz (downlink), and its second harmonic (1650-1670MHz/1740-1760MHz) and the third-order intermodulation signal of Telecom FDD-LTE2.1 (frequency range being 1920-1940MHz/2110-2130MHz) fall into the 3.5GHz band, which may cause passive intermodulation interference to Telecom & Unicom NR3.5. To reduce interference, Telecom CDMA RRU 7 and Telecom FDD-LTE2.1 RRU 10 separately access different POIs. For example, Telecom CDMA RRU 7 accesses a first POI 14 and a fourth POI 17; Telecom FDD-LTE2.1 RRU 10 accesses a second POI 15 and a third POI 16. Mobile FDD-LTE1.8 (1710-1735MHz/1805-1830MHz) and Unicom FDD-LTE1.8 (1735-1765MHz/1830-1860MHz) have adjacent frequencies. To reduce interference, Mobile FDD-LTE1.8 RRU 8 and Unicom FDD-LTE1.8 RRU 9 separately access different POIs. For example, Mobile FDD-LTE1.8 RRU 8 accesses the first POI 14 and the third POI 16; Unicom FDD-LTE1.8 RRU 9 accesses the second POI 15 and the fourth POI 17. Additionally, to reduce interference, Telecom FDD-LTE2.1 RRU 10, Mobile FDD-LTE1.8 RRU 8, and Unicom FDD-LTE1.8 RRU 9 should also try to avoid accessing the same path.

The MIMO communication system based on the cross-polarized leaky coaxial cable provided in the present application includes: RRU devices of different standards and different frequency bands of Unicom, Mobile, and Telecom, a first POI, a second POI, a third POI, a fourth POI, and 4 leaky coaxial cables arranged side by side, radiation polarization directions of every two adjacent leaky coaxial cables are different, each POI device is separately connected to one leaky coaxial cable; all 5G/6G RRU devices among the RRU devices are signal-connected to all POI devices, and among the RRU devices, 2G/3G/4G RRU devices whose signals produce adjacent channel interference or intermodulation interference are signal-connected to different POI devices.

The MIMO communication system based on the cross-polarized leaky coaxial cable in this embodiment improves a connection between RRUs and POI devices. In this embodiment, in a case of 4 cross-polarized leaky coaxial cables, each 2G/3G/4G RRU device of different operators can be connected to at most two POI devices, while each 5G/6G RRU device of different operators is connected to all POI devices, i.e., each POI device is connected to all 5G/6G RRU devices of different operators. As shown in FIG. 2, in this embodiment, Telecom CDMA RRU 7 is connected to the first POI 14 and the fourth POI 17, thereby feeding CDMA800 standard signals into a first vertically polarized leaky coaxial cable 18 or a second horizontally polarized leaky coaxial cable 21; Mobile FDD-LTE1.8 RRU 8 is connected to the first POI 14 and the third POI 16, thereby feeding Mobile FDD-LTE1.8 standard signals into the first vertically polarized leaky coaxial cable 18 or a second vertically polarized leaky coaxial cable 20; Unicom FDD-LTE1.8 RRU 9 is connected to the second POI 15 and the fourth POI 17, thereby feeding Unicom FDD-LTE1.8 standard signals into a first horizontally polarized leaky coaxial cable 19 or the second horizontally polarized leaky coaxial cable 21; Telecom FDD-LTE2.1 RRU 10 is connected to the second POI 15 and the third POI 16, thereby feeding Telecom FDD-LTE2.1 standard signals into the first horizontally polarized leaky coaxial cable 19 or the second vertically polarized leaky coaxial cable 20; Mobile TD (E) RRU 11 is connected to the third POI 16 and the fourth POI 17, thereby feeding Mobile TD (E) standard signals into the second vertically polarized leaky coaxial cable 20 or the second horizontally polarized leaky coaxial cable 21; Mobile NR2.6 RRU 12 is connected to the first POI 14, the second POI 15, the third POI 16, and the fourth POI 17, thereby feeding Mobile NR2.6 standard signals into the first vertically polarized leaky coaxial cable 18, the first horizontally polarized leaky coaxial cable 19, the second vertically polarized leaky coaxial cable 20 or the second horizontally polarized leaky coaxial cable 21; Telecom & China Unicom NR3.5 RRU 13 is connected to the first POI 14, the second POI 15, the third POI 16, and the fourth POI 17, thereby feeding Telecom & China Unicom NR3.5 standard signals into the first vertically polarized leaky coaxial cable 18, the first horizontally polarized leaky coaxial cable 19, the second vertically polarized leaky coaxial cable 20 or the second horizontally polarized leaky coaxial cable 21.

As shown in Table 1 below, in FIG. 2, the first POI 14 receives signals from Telecom CDMA RRU 7, Mobile FDD-LTE1.8 RRU 8, Mobile NR2.6 RRU 12, and Telecom & China Unicom NR3.5 RRU 13. The second POI 15 receives signals from Unicom FDD-LTE1.8 RRU 9, Telecom FDD-LTE2.1 RRU 10, Mobile NR2.6 RRU 12, and Telecom & Unicom NR3.5 RRU 13. The third POI 16 receives signals from Mobile FDD-LTE1.8 RRU 8, Telecom FDD-LTE2.1 RRU 10, Mobile TD (E) RRU 11, Mobile NR2.6 RRU 12, and Telecom & Unicom NR3.5 RRU 13. The fourth POI 17 receives signals from Telecom CDMA RRU 7, Unicom FDD-LTE1.8 RRU 9, Mobile TD (E) RRU 11, Mobile NR2.6 RRU 12, and Telecom NR3.5 RRU 13.

**Table 1: Connection Table for Four-Cable Allocation Scheme**

| Access system | Telecom CDMA | Mobile FDD-LTE1.8 | Unicom FDD-LTE1.8 | Telecom FDD-LTE2.1 | Mobile TD (E) | Mobile NR2.6 | Telecom & Unicom NR3.5 |
|---|---|---|---|---|---|---|---|
| POI1 | T/RX | T/RX | - | - | - | T/RX | T/RX |
| POI2 | - | - | T/RX | T/RX | - | T/RX | T/RX |
| POI3 | - | T/RX | - | T/RX | T/RX | T/RX | T/RX |
| POI4 | T/RX | - | T/RX | - | T/RX | T/RX | T/RX |

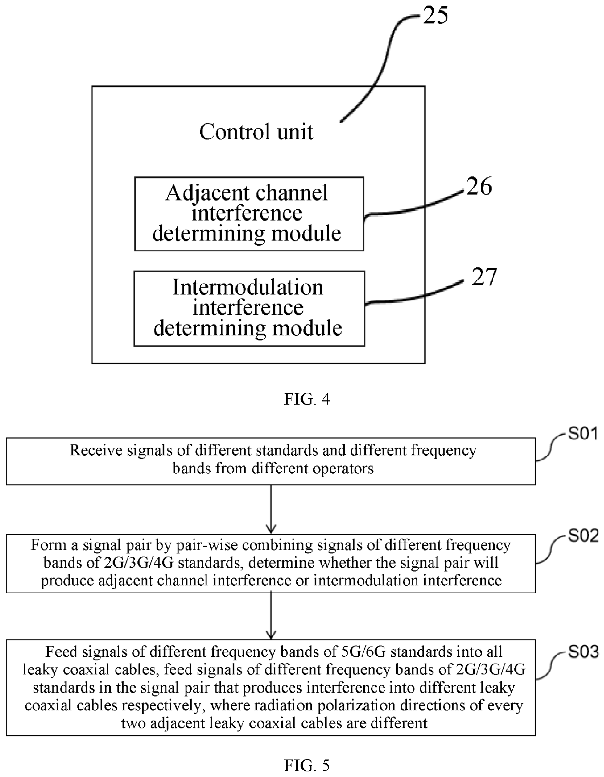

In this embodiment, each leaky coaxial cable is separately connected to one POI device. As shown in FIG. 2, 4 leaky coaxial cables correspond to 4 POI devices, namely the first POI 14, the second POI 15, the third POI 16, and the fourth POI 17 as shown in FIG. 2. As shown in FIG. 2, the first POI 14 is connected to the first vertically polarized leaky coaxial cable 18, the second POI 15 is connected to the first horizontally polarized leaky coaxial cable 19, the third POI 16 is connected to the second vertically polarized leaky coaxial cable 20, and the fourth POI 17 is connected to the second horizontally polarized leaky coaxial cable 21.

In FIG. 2, standard signals of different frequency bands from RRUs of different operators are combined through one POI and then fed into one leaky coaxial cable respectively. For example, signals are combined through the first POI 14 and then fed into the first vertically polarized leaky coaxial cable 18; signals are combined through the second POI 15 and then fed into the first horizontally polarized leaky coaxial cable 19; signals are combined through the third POI 16 and then fed into the second vertically polarized leaky coaxial cable 20; signals are combined through the fourth POI 17 and then fed into the second horizontally polarized leaky coaxial cable 21.

As shown in FIG. 2, among multiple leaky coaxial cables arranged side by side in the MIMO system based on the leaky coaxial cable, multiple leaky coaxial cables adopt a cross-polarized leaky coaxial cable combination, i.e., the radiation polarization directions between every two adjacent leaky coaxial cables are different. For example, in this embodiment, 4 leaky coaxial cables are used to constitute a 4×4 MIMO system with 4 transmissions and 4 receptions. The first one is vertically polarized, the second one is horizontally polarized, the third one is vertically polarized, and the fourth one is horizontally polarized, which are the first vertically polarized leaky coaxial cable 18, the first horizontally polarized leaky coaxial cable 19, the second vertically polarized leaky coaxial cable 20, and the second horizontally polarized leaky coaxial cable 21 respectively as shown in FIG. 2.

In this embodiment, as shown in FIG. 2, since there are 4 leaky coaxial cables, if each RRU device requires a dual-path output, adjacent channel signals will inevitably be in the same leaky coaxial cable. But to reduce interference, there can be at most two adjacent channel signals in one leaky coaxial cable. 2G/3G/4G signals of different operators are separated, and respectively combined with 5G/6G signals through POIs, and then fed into different leaky coaxial cables, and adjacent frequency bands of at most two operators can be fed into the same leaky coaxial cable. This can reduce adjacent channel interference between adjacent channel signals in the same leaky coaxial cable. For example, Mobile FDD-LTE1.8 (1710-1735MHz/1805-1830MHz) and Unicom FDD-LTE1.8 (1735-1765MHz/1830-1860MHz), the two frequency bands are closely adjacent to each other, simultaneously feeding them into the same leaky coaxial cable causes severe adjacent channel interference, so they need to be combined with 5G/6G signals respectively and fed into different leaky coaxial cables. When there are 4 leaky coaxial cables and 4G is a single-path signal, Mobile FDD-LTE1.8 and a 5G/6G frequency band are combined through a POI and fed into the first vertically polarized leaky coaxial cable 18, while Unicom FDD-LTE1.8 and a 5G/6G frequency band are combined through a POI and fed into the second horizontally polarized leaky coaxial cable 19. When the 4G signal is a dual-path signal, Mobile FDD-LTE1.8 and a 5G/6G frequency band are combined through the first POI 14 and the third POI 16 respectively and fed into the first vertically polarized leaky coaxial cable 18 and the second vertically polarized leaky coaxial cable 20; Unicom FDD-LTE1.8 and a 5G/6G frequency band are combined through the second POI 15 and the fourth POI 17 respectively and fed into the first horizontally polarized leaky coaxial cable 19 and the second horizontally polarized leaky coaxial cable 21.

In some other embodiments, the number of POI devices and the number of leaky coaxial cables can also be adjusted according to a condition allowed by the deployment scenario, such as 3 leaky coaxial cables, 5 leaky coaxial cables, 6 leaky coaxial cables, 7 leaky coaxial cables, 8 leaky coaxial cables, 9 leaky coaxial cables, 10 leaky coaxial cables, etc. Generally, in the subway environment, in addition to communication leaky coaxial cables, within the limited installation space of rail transit, it is also necessary to install various cables and devices such as subway-dedicated leaky coaxial cables, police-dedicated leaky coaxial cables, optical cable racks, etc. To avoid interference, a certain installation distance is also required between cables of different wireless communication systems. In the existing tunnel scenario, the number of leaky coaxial cables can be adjusted according to the space allowed by the deployment scenario and actual needs of the communication network.

Furthermore, the polarization direction of leaky coaxial cables is not limited to vertical polarization and horizontal polarization. A direction of the radiated electric field of a slot of a leaky coaxial cable is a polarization direction, which is perpendicular to a wide side of the slot of the leaky coaxial cable. In other embodiments, the polarization direction of leaky coaxial cables can have other designed combinations, for example, a leaky coaxial cable can also be chosen as a +45° polarized leaky coaxial cable a -45° polarized leaky coaxial cable, etc., as long as the radiation polarization directions between every two adjacent leaky coaxial cables are different.

In some embodiments, 4 leaky coaxial cables are used, where the first one is vertically polarized, the second one is horizontally polarized, the third one is +45° polarized, and the fourth one is -45° polarized.

In some embodiments, 6 leaky coaxial cables are used, where the first one is vertically polarized, the second one is horizontally polarized, the third one is +45° polarized, the fourth one is -45° polarized, the fifth one is vertically polarized, and the sixth one is horizontally polarized.

In some embodiments, the radiation polarization directions of multiple leaky coaxial cables are alternately arranged in a manner of horizontal polarization and vertical polarization. Similarly, 6 leaky coaxial cables are used, where the first one is vertically polarized, the second one is horizontally polarized, the third one is vertically polarized, the fourth one is horizontally polarized, the fifth one is vertically polarized, and the sixth one is horizontally polarized.

According to the adjustment of the number of POI devices and the number of leaky coaxial cables, some embodiments of the present application provide a MIMO communication system based on a cross-polarized leaky coaxial cable, including: multiple RRU devices, multiple POIs, and multiple leaky coaxial cables arranged side by side, and radiation polarization directions of every two adjacent leaky coaxial cables are different. The POIs are signal-connected to the leaky coaxial cables, each POI is connected to one leaky coaxial cable. The RRU devices are signal-connected to the POIs, where RRU devices of 5G/6G standards are signal-connected to all POIs; among RRU devices of 2G/3G/4G standards, those RRU devices whose signals have adjacent channel interference or intermodulation interference are signal-connected to different POIs.

The MIMO communication system based on the cross-polarized leaky coaxial cable provided by some embodiments of the present application, as shown in FIG.3, may further include a control unit connected between the RRU devices and the POIs. For example, in the structural principle shown in FIG. 3, Telecom CDMA RRU 7, Mobile FDD-LTE1.8 RRU 8, Unicom FDD-LTE1.8 RRU 9, Telecom FDD-LTE2.1 RRU 10, Mobile TD (E) RRU 11 (i.e., Mobile TD-LTE E-band RRU), Mobile NR2.6 RRU 12, Telecom & China Unicom NR3.5 RRU 13 are all connected to a control unit 25. The control unit 25 is signal-connected to a first POI 14, a second POI 15, a third POI 16, and a fourth POI 17. The first POI 14 is connected to a first vertically polarized leaky coaxial cable 18, the second POI 15 is connected to a first horizontally polarized leaky coaxial cable 19, the third POI 16 is connected to a second vertically polarized leaky coaxial cable 20, and the fourth POI 17 is connected to a second horizontally polarized leaky coaxial cable 21. The control unit 25 is configured to receive signals of different standards and different frequency bands of different operators from the multiple RRU devices, form signal pair(s) by pair-wise combining signals of different frequency bands of 2G/3G/4G standards, determine whether the signal pair(s) will produce adjacent channel interference or intermodulation interference, feed signals of different frequency bands of 5G/6G standards into all POIs, and feed signals of different frequency bands of 2G/3G/4G standards in the signal pair(s) that produce interference into different POIs respectively.

Optionally, two signals in a signal pair that produces interference can be fed into different leaky coaxial cables that are spaced apart (not adjacent) through different POIs respectively, so that the signal pair that produces interference is fed into different leaky coaxial cables with a greater spacing distance, to further reduce interference.

Preferably, when the radiation polarization directions of multiple leaky coaxial cables are alternately arranged in the manner of horizontal polarization and vertical polarization, two signals in a signal pair that produces interference can be fed into different leaky coaxial cables with the same polarization manner that are spaced apart through different POIs respectively. This design allows the signal pair that produces interference to be fed into different leaky coaxial cables with a greater spacing distance, to further reduce interference.

As shown in FIG. 4, the control unit 25 further includes an adjacent channel interference determining module 26. The adjacent channel interference determining module 26 is configured to determine whether a signal pair will produce adjacent channel interference. Specifically, the adjacent channel interference determining module 26 is configured to acquire a first upper frequency limit and a first lower frequency limit of a frequency band of a first signal in the signal pair, and a second upper frequency limit and a second lower frequency limit of a frequency band of a second signal in the signal pair; determine that the signal pair will produce adjacent channel interference based on the first upper frequency limit being less than the second upper frequency limit and a difference between the second lower frequency limit and the first upper frequency limit being not greater than 1MHz, or based on the first upper frequency limit being greater than the second upper frequency limit and a difference between the first lower frequency limit and the second upper frequency limit being not greater than 1MHz.

As shown in FIG. 4, the control unit 25 further includes an intermodulation interference determining module 27. The intermodulation interference determining module 27 is configured to determine whether a signal pair will produce intermodulation interference. Specifically, the intermodulation interference determining module 27 is configured to acquire a first upper frequency limit and a first lower frequency limit of a frequency band of a first signal in the signal pair, and a second upper frequency limit and a second lower frequency limit of a frequency band of a second signal in the signal pair; calculate a frequency at which the signal pair produces intermodulation interference according to an intermodulation interference formula |m₁F₁±m₂F₂±·. ·±mₙFₙ|, where m₁±m₂···±mₙ+n≤9, mₙ≤8, n≤9, mₙ and n are positive integers, Fₙ is any one of the first upper frequency limit, the first lower frequency limit, the second upper frequency limit, or the second lower frequency limit; determine that the signal pair will produce intermodulation interference based on that the aforementioned frequency at which the intermodulation interference is produced falls within frequency bands of signals of different standards and different frequency bands from different operators.

Of course, in other embodiments, it is also possible to pre-determine signal pair(s) that will produce intermodulation interference or adjacent channel interference manually or by a processor independent of the MIMO communication system based on the cross-polarized leaky coaxial cable, and then determine a connection manner for RRU devices and POIs corresponding to each signal pair. The specific methods for determining signal pair(s) that produce intermodulation interference or adjacent channel interference are the same as the above control unit and will not be repeated here. Additionally, to improve integration of the system, in some embodiments, the control unit can be integrated with multiple POIs into one unit. In some embodiments, multiple POIs can be integrated into one POI unit, and the control unit is connected between this POI unit and multiple RRU devices.

The present application also provides a method for controlling a MIMO communication system based on a cross-polarized leaky coaxial cable, which can particularly reduce interference between adjacent channel signals of different operators. As shown in the flowchart of FIG. 5, it includes the following steps.

S01: Receive signals of different standards and different frequency bands from different operators.

S02: Form a signal pair by pair-wise combining signals of different frequency bands of 2G/3G/4G standards, determine whether the signal pair will produce adjacent channel interference or intermodulation interference.

S03: Feed signals of different frequency bands of 5G/6G standards into all leaky coaxial cables, feed signals of different frequency bands of 2G/3G/4G standards in the signal pair that produces interference into different leaky coaxial cables respectively, where radiation polarization directions of every two adjacent leaky coaxial cables are different.

For example, a combination of Telecom CDMA800 standard signals and Telecom FDD-LTE2.1 standard signals will produce intermodulation interference and cannot be fed into the same leaky coaxial cable. Telecom CDMA800 standard signals are connected to the first POI 14 and the fourth POI 17, and the signals are fed into the first vertically polarized leaky coaxial cable 18 and the second horizontally polarized leaky coaxial cable 21; Telecom FDD-LTE2.1 standard signals are connected to the second POI 15 and the third POI 16, and the signals are fed into the first horizontally polarized leaky coaxial cable 19 and the second vertically polarized leaky coaxial cable 20.

For example, Mobile FDD-LTE1.8 standard signals and Unicom FDD-LTE1.8 standard signals cannot be combined as they will produce adjacent channel interference and cannot be fed into the same leaky coaxial cable. Mobile FDD-LTE1.8 standard signals are connected to the first POI 14 and the third POI 16, and the signals are fed into the first vertically polarized leaky coaxial cable 18 and the second vertically polarized leaky coaxial cable 20; Unicom FDD-LTE1.8 standard signals are connected to the second POI 15 and the fourth POI 17, and the signals are fed into the first horizontally polarized leaky coaxial cable 19 and the second horizontally polarized leaky coaxial cable 21.

In step S02, a calculation method for adjacent channels is that a difference between a lower limit frequency of a higher frequency band and an upper limit frequency of a lower frequency band for two signals of different standards and different frequency bands ≤ 1MHz. Specifically, determining whether a signal pair will produce adjacent channel interference includes steps: acquire a first upper frequency limit and a first lower frequency limit of a frequency band of a first signal in the signal pair, and a second upper frequency limit and a second lower frequency limit of a frequency band of a second signal in the signal pair; determine that the signal pair will produce adjacent channel interference based on the first upper frequency limit being less than the second upper frequency limit and a difference between the second lower frequency limit and the first upper frequency limit being not greater than 1MHz; or determine that the signal pair will produce adjacent channel interference based on the first upper frequency limit being greater than the second upper frequency limit and a difference between the first lower frequency limit and the second upper frequency limit being not greater than 1MHz.

In step S02, determining whether a signal pair will produce intermodulation interference includes steps: acquire a first upper frequency limit and a first lower frequency limit of a frequency band of a first signal in the signal pair, and a second upper frequency limit and a second lower frequency limit of a frequency band of a second signal in the signal pair; calculate a frequency at which the signal pair produces intermodulation interference according to an intermodulation interference formula |m₁F₁±m₂F₂±·. ·±mₙFₙ|, where m₁±m₂···±mₙ+n≤9, mₙ≤8, n≤9, mₙ and n are positive integers, Fₙ is any one of the first upper frequency limit, the first lower frequency limit, the second upper frequency limit, or the second lower frequency limit.

The MIMO communication system based on a cross-polarized leaky coaxial cable provided in this embodiment can be applied to coverage of 2G/3G/4G/5G/6G signals. By receiving signals of different standards and different frequency bands from different operators, and processing 2G/3G/4G and 5G/6G signals separately, signals of different frequency bands of 5G/6G standards are fed into all leaky coaxial cables, which ensures the power of 5G/6G signals, thereby improving network coverage and download rates of 5G/6G signals. Signals of different frequency bands of 2G/3G/4G standards are pair-wise combined to form signal pair(s), it is determined whether the signal pair(s) will produce adjacent channel interference or intermodulation interference, and signals of different standards in a combination of different standard signals that produce interference are fed into different leaky coaxial cables respectively. On one hand, adjacent channel interference between adjacent channel signals in the same leaky coaxial cable can be avoided, or intermodulation interference among different signals is avoided, thereby reducing signal interference and improving communication quality. On the other hand, the radiation polarization directions of every two adjacent leaky coaxial cables are different, reducing the minimum allowable installation distance between the leaky coaxial cables, thereby saving the space required for installing the leaky coaxial cables, allowing more leaky coaxial cables to be deployed, increasing the number of user accesses, and improving communication quality.

### Embodiment 2:

In some other embodiments, the number of POI devices can be merged. For example, multiple POIs can be integrated into one POI unit, e.g., there is only one POI. POI 6 can include multiple POI output units, each POI output unit corresponding to one leaky coaxial cable. The POI 6 is a device that combines multiple paths of RRU signals for downlink output and splits the received uplink signals for output to corresponding receivers.

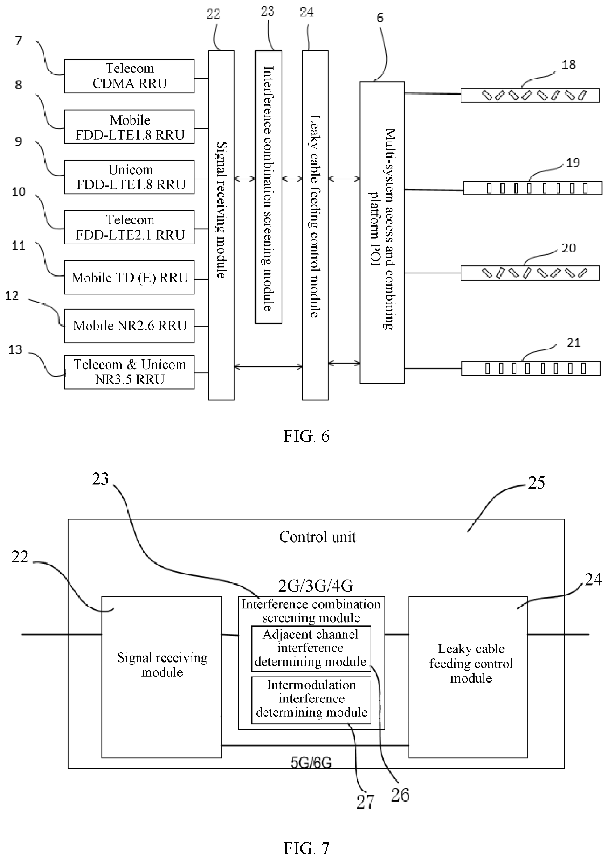

As shown in FIG. 6, a MIMO communication system based on a cross-polarized leaky coaxial cable that reduces interference, and meets the coverage needs of 2G/3G/4G/5G/6G, includes: RRU devices, a POI 6 (multi-system access and combining platform), and multiple leaky coaxial cables. The RRU devices include Telecom CDMA RRU 7, Mobile FDD-LTE1.8 RRU 8, Unicom FDD-LTE1.8 RRU 9, Telecom FDD-LTE2.1 RRU 10, Mobile TD (E) RRU 11, Mobile NR2.6 RRU 12, Telecom & Unicom NR3.5 RRU 13. In this example, 4 leaky coaxial cables are provided, which are still the first vertically polarized leaky coaxial cable 18, the first horizontally polarized leaky coaxial cable 19, the second vertically polarized leaky coaxial cable 20, and the second horizontally polarized leaky coaxial cable 21. Radiation polarization directions of every two adjacent leaky coaxial cables are different. Correspondingly, the POI 6 includes 4 POI output units, each POI output unit corresponding to one leaky coaxial cable. As for other contents of the polarization scheme of the leaky coaxial cable, reference can be made to the description in Embodiment 1, which will not be repeated here.

In some other embodiments, the POI device can also be divided into 4 POIs, e.g., the first POI 14, the second POI 15, the third POI 16, and the fourth POI 17, as shown in FIG. 2 above, where the first POI 14 is connected to the first vertically polarized leaky coaxial cable 18, the second POI 15 is connected to the first horizontally polarized leaky coaxial cable 19, the third POI 16 is connected to the second vertically polarized leaky coaxial cable 20, and the fourth POI 17 is connected to the second horizontally polarized leaky coaxial cable 21. For the rest of the contents, reference is made to the description in Embodiment 1, which will not be repeated here.

As shown in FIG. 6, in this embodiment, a signal receiving module 22, an interference combination screening module 23, and a leaky cable feeding control module 24 are further included. Telecom CDMA RRU 7, Mobile FDD-LTE1.8 RRU 8, Unicom FDD-LTE1.8 RRU 9, Telecom FDD-LTE2.1 RRU 10, Mobile TD (E) RRU 11, Mobile NR2.6 RRU 12, Telecom & Unicom NR3.5 RRU 13 are all signal-connected to the signal receiving module 22. The signal receiving module 22 is signal-connected to the interference combination screening module 23 and the leaky cable feeding control module 24. The interference combination screening module 23 is signal-connected to the leaky cable feeding control module 24. The leaky cable feeding control module 24 is signal-connected to the POI 6, e.g., the leaky cable feeding control module 24 is connected to a POI output unit within the POI 6 corresponding to each leaky coaxial cable. The POI 6 is signal-connected to multiple leaky coaxial cables. The signal receiving module 22 is used to receive signals of different standards from different operators. The interference combination screening module 23 is used to pair-wise combine signals of different frequency bands of 2G/3G/4G standards to form signal pair(s), and determine whether the signal pair(s) will produce adjacent channel interference or intermodulation interference. The leaky cable feeding control module 24 is connected to the interference combination screening module 23, the signal receiving module 22, and the POI 6, and is used to feed signals of different frequency bands of 5G/6G standards into all POI output units in the POI 6, thereby feeding them into all leaky coaxial cables, and feed signals of different frequency bands of 2G, 3G, 4G standards in the signal pair(s) that produce interference into different POI output units in the POI 6 respectively, thereby feeding them into different leaky coaxial cables.

As shown in FIG. 7, the signal receiving module 22, the interference combination screening module 23, and the leaky cable feeding control module 24 can be integrated into one module, e.g., a control unit 25. The interference combination screening module 23 further includes an adjacent channel interference determining module 26. The adjacent channel interference determining module 26 is used to determine whether a signal pair will produce adjacent channel interference. Specifically, the adjacent channel interference determining module 26 is configured to acquire a first upper frequency limit and a first lower frequency limit of a frequency band of a first signal in the signal pair, and a second upper frequency limit and a second lower frequency limit of a frequency band of a second signal in the signal pair; determine that the signal pair will produce adjacent channel interference based on the first upper frequency limit being less than the second upper frequency limit and a difference between the second lower frequency limit and the first upper frequency limit being not greater than 1MHz, or based on the first upper frequency limit being greater than the second upper frequency limit and a difference between the first lower frequency limit and the second upper frequency limit being not greater than 1MHz. The interference combination screening module 23 further includes an intermodulation interference determining module 27. The intermodulation interference determining module 27 is used to determine whether a signal pair will produce intermodulation interference. Specifically, the intermodulation interference determining module 27 is configured to acquire a first upper frequency limit and a first lower frequency limit of a frequency band of a first signal in the signal pair, and a second upper frequency limit and a second lower frequency limit of a frequency band of a second signal in the signal pair; calculate a frequency at which the signal pair produces intermodulation interference according to an intermodulation interference formula |m₁F₁±m₂F₂±···±mₙFₙ|, where m₁±m₂···±mₙ+n≤9, mₙ≤8, n≤9, mₙ and n are positive integers, Fₙ is any one of the first upper frequency limit, the first lower frequency limit, the second upper frequency limit, or the second lower frequency limit; determine that the signal pair will produce intermodulation interference based on the aforementioned frequency at which the intermodulation interference is produced falls within frequency bands of signals of different standards and different frequency bands from different operators.

In the embodiment of FIG. 6, signal reception, interference combination screening, leaky cable feeding control, etc., are modularized, while in FIG. 2, to facilitate understanding of the intention of the present application, signal reception, interference combination screening, and leaky cable feeding control are directly represented by coaxial cable connections and fixed as a setup structure. It can also be understood that the embodiment of FIG. 2 is only a fixed setting of the embodiment of FIG. 6 for easier understanding.

In this embodiment, the signal receiving module 22, the interference combination screening module 23, and the leaky cable feeding control module 24 can be control circuits based on a processor, made into a PCB structure. The processor can be an MCU (Micro Control Unit), an SCM (Single Chip Microcomputer), a central processing unit (CPU), a digital signal processor (DSP), or other forms of processing units with data processing capabilities and/or program execution capabilities (e.g., Field Programmable Gate Array (FPGA), etc.). For example, the central processing unit (CPU) can be of X86 or ARM architecture, etc. The processor can be a general-purpose processor or a special-purpose processor. The processor controls to screen out a combination that produces interference (adjacent channel interference and intermodulation interference), and controls different signals in the interference combination to enter different leaky coaxial cables, thereby realizing path configuration, e.g., configured as the path in FIG. 2. In some embodiments, at least one of the signal receiving module 22, the interference combination screening module 23, and the leaky cable feeding control module 24 can be integrated with the POI device, or just a software/hardware module within the POI device. For other modules or descriptions, reference is made to Embodiment 1, which will not be repeated here.

The MIMO communication system based on the cross-polarized leaky coaxial cable that reduces interference provided in this embodiment meets the coverage of 2G/3G/4G/5G/6G signals, and is provided with the signal receiving module 22, the interference combination screening module 23, and the leaky cable feeding control module 24. RRU devices of different operators are connected to receive signals of different standards and different frequency bands from different operators, signals of different frequency bands of 5G/6G standards are fed into all leaky coaxial cables, and it is determined whether pair-wise combination(s) of signals of different frequency bands of 2G/3G/4G will produce adjacent channel interference and intermodulation interference. Signals of different standards and different frequencies in a combination of signals of different frequency bands of 2G/3G/4G that produce interference are fed into different leaky coaxial cables through the POI respectively, thereby realizing the setup and control of links from RRU devices of different operators to input ports of the POI, preventing adjacent channel signals and interfering signals from being fed into the same leaky coaxial cable, reducing signal interference, and improving communication quality. In addition, the radiation polarization directions of every two adjacent leaky coaxial cables are different, thereby reducing the requirement on a distance between leaky coaxial cables, facilitating construction and installation, and allowing more leaky coaxial cables to be deployed, increasing the number of user accesses, and improving communication quality.

The embodiments of the present application are described in detail above. Specific examples are used herein to illustrate principles and implementation of the present application. The description of the above embodiments is only intended to help understand the method and core ideas of the present application. At the same time, for those of ordinary skill in the art, according to the ideas of the present application, there will be changes in specific embodiments and scope of application. In summary, the content of this specification should not be construed as limiting the present application.

## Claims

1. A MIMO communication system based on a cross-polarized leaky coaxial cable, comprising: multiple RRU devices, multiple POIs, and multiple leaky coaxial cables arranged side by side, wherein radiation polarization directions of every two adjacent leaky coaxial cables are different;
the POIs are signal-connected to the leaky coaxial cables, and each POI is signal-connected to one leaky coaxial cable;
the RRU devices are signal-connected to the POIs, wherein RRU devices of 5G/6G standards are signal-connected to all POIs; among RRU devices of 2G/3G/4G standards, those RRU devices whose signals have adjacent channel interference or intermodulation interference are signal-connected to different POIs.

2. The MIMO communication system based on the cross-polarized leaky coaxial cable according to claim 1, further comprising a control unit, connected between the RRU devices and the POIs, wherein the control unit is configured to receive signals of different standards and different frequency bands of different operators from the multiple RRU devices, form a signal pair by pair-wise combining signals of different frequency bands of 2G/3G/4G standards, determine whether the signal pair produces adjacent channel interference or intermodulation interference, feed signals of different frequency bands of 5G/6G standards into all POIs, and feed signals of different frequency bands of 2G/3G/4G standards in the signal pair that produces interference into different POIs respectively.

3. The MIMO communication system based on the cross-polarized leaky coaxial cable according to claim 2, wherein the control unit further comprises an adjacent channel interference determining module, the adjacent channel interference determining module is configured to acquire a first upper frequency limit and a first lower frequency limit of a frequency band of a first signal in the signal pair, and a second upper frequency limit and a second lower frequency limit of a frequency band of a second signal in the signal pair; determine that the signal pair produces adjacent channel interference based on the first upper frequency limit being less than the second upper frequency limit and a difference between the second lower frequency limit and the first upper frequency limit being not greater than 1MHz, or based on the first upper frequency limit being greater than the second upper frequency limit and a difference between the first lower frequency limit and the second upper frequency limit being not greater than 1MHz.

4. The MIMO communication system based on the cross-polarized leaky coaxial cable according to claim 2 or 3, wherein the control unit further comprises an intermodulation interference determining module, the intermodulation interference determining module is configured to acquire a first upper frequency limit and a first lower frequency limit of a frequency band of a first signal in the signal pair, and a second upper frequency limit and a second lower frequency limit of a frequency band of a second signal in the signal pair; calculate a frequency at which the signal pair produces intermodulation interference according to an intermodulation interference formula |m₁F₁±m₂F₂±···±mₙFₙ|, wherein m₁±m₂···±mₙ+n≤9, mₙ≤8, n≤9, mₙ and n are positive integers, Fₙ is any one of the first upper frequency limit, first lower frequency limit, the second upper frequency limit, or the second lower frequency limit; determine that the signal pair produces intermodulation interference based on that the frequency at which the intermodulation interference is produced falls within frequency bands of signals of different standards and different frequency bands from different operators.

5. The MIMO communication system based on the cross-polarized leaky coaxial cable according to any one of claims 2 to 4, wherein the control unit is integrated with the multiple POIs into one unit; or, the multiple POIs are integrated into one POI unit, and the control unit is connected between the multiple RRU devices and the POI unit.

6. The MIMO communication system based on the cross-polarized leaky coaxial cable according to any one of claims 1 to 5, wherein the RRU devices of 2G/3G/4G standards are signal-connected to at most two POIs.

7. The MIMO communication system based on the cross-polarized leaky coaxial cable according to any one of claims 1 to 6, wherein a polarization direction of the leaky coaxial cables is vertical polarization, horizontal polarization, +45° polarization, or -45° polarization.

8. The MIMO communication system based on the cross-polarized leaky coaxial cable according to any one of claims 1 or 7, wherein the radiation polarization directions of the multiple leaky coaxial cables are alternately arranged in a manner of horizontal polarization and vertical polarization.

9. The MIMO communication system based on the cross-polarized leaky coaxial cable according to claim 8, wherein
signals of different frequency bands of 2G/3G/4G standards are pair-wise combined to form a signal pair, and two signals in the signal pair that produces adjacent channel interference or intermodulation interference are fed into different leaky coaxial cables with a same polarization manner through different POIs respectively.

10. A MIMO communication system based on a cross-polarized leaky coaxial cable, comprising: RRU devices, a POI, and multiple leaky coaxial cables arranged side by side, wherein radiation polarization directions of every two adjacent leaky coaxial cables are different, and the POI is signal-connected to the leaky coaxial cables;
the MIMO communication system further comprises: a signal receiving module, connected to the RRU devices, and configured to receive signals of different standards and different frequency bands of different operators from the RRU devices;
an interference combination screening module, connected to the signal receiving module, and configured to form a signal pair by pair-wise combining signals of different frequency bands of 2G/3G/4G standards, and determine whether the signal pair produces adjacent channel interference or intermodulation interference;
a leaky cable feeding control module, connected to the interference combination screening module, the signal receiving module, and the POI, and configured to feed signals of different frequency bands of 5G/6G standards through the POI into all the leaky coaxial cables, and feed signals of different frequency bands of 2G, 3G, 4G standards in the signal pair that produces interference through the POI into different leaky coaxial cables respectively.

11. A MIMO communication system based on a cross-polarized leaky coaxial cable, comprising: RRU devices of different standards and different frequency bands of Unicom, Mobile, and Telecom, a first POI, a second POI, a third POI, a fourth POI, and 4 leaky coaxial cables arranged side by side, wherein radiation polarization directions of every two adjacent leaky coaxial cables are different, and each POI device is separately connected to one leaky coaxial cable;
all 5G/6G RRU devices among the RRU devices are signal-connected to all POI devices, and among the RRU devices, 2G/3G/4G RRU devices whose signals produce adjacent channel interference or intermodulation interference are signal-connected to different POI devices.
